(19) Europäisches Patentamt
European Patent Office
Office européen des brevets

(11) **EP 2 900 529 B1**

(12) **EUROPÄISCHE PATENTSCHRIFT**

(45) Veröffentlichungstag und Bekanntmachung des Hinweises auf die Patenterteilung:
**29.08.2018  Patentblatt 2018/35**

(21) Anmeldenummer: **13759516.1**

(22) Anmeldetag: **09.09.2013**

(51) Int Cl.:
*B60T 7/04* (2006.01)          *B60T 8/32* (2006.01)
*B60T 8/40* (2006.01)          *B60T 13/66* (2006.01)
*B60T 13/68* (2006.01)          *B60T 13/74* (2006.01)

(86) Internationale Anmeldenummer:
**PCT/EP2013/068577**

(87) Internationale Veröffentlichungsnummer:
**WO 2014/048705 (03.04.2014 Gazette 2014/14)**

(54) **VERFAHREN ZUR REGELUNG EINER BREMSANLAGE FÜR KRAFTFAHRZEUGE**

METHOD FOR CONTROLLING A BRAKING SYSTEM FOR MOTOR VEHICLES

PROCÉDÉ DE COMMANDE D'UN SYSTÈME DE FREINAGE POUR VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2012  DE 102012217752**
**14.08.2013  DE 102013216157**

(43) Veröffentlichungstag der Anmeldung:
**05.08.2015  Patentblatt 2015/32**

(73) Patentinhaber: **Continental Teves AG & Co. oHG 60488 Frankfurt (DE)**

(72) Erfinder: **BÖHM, Jürgen 65558 Oberneisen (DE)**

(56) Entgegenhaltungen:
**WO-A1-2011/154369          WO-A2-2012/101040
DE-A1-102012 200 494**

**Beschreibung**

Die Erfindung betrifft ein Verfahren zur Regelung einer Bremsanlage für Kraftfahrzeuge gemäß dem Oberbegriff von Anspruch 1, eine Regelvorrichtung nach dem Oberbegriff von Anspruch 10 sowie eine Bremsanlage gemäß dem Oberbegriff von Anspruch 12.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen, entweder direkt oder über den Hauptbremszylinder, stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung, welche z.B. mit dem Hauptbremszylinder in Wirkverbindung steht. Zur Ansteuerung der Bremsanlage ist ein Sollwertgeber vorgesehen, welcher z.B. die elektrischen Signale von einem oder mehreren Sensoren zur Erfassung des Fahrerbremswunsches (Betätigungswunsches) auswertet, um einen Sollwert für die Ansteuerung der Druckbereitstellungseinrichtung zu bestimmen. Bei diesen Bremsanlagen kann die Druckbereitstellungseinrichtung jedoch auch ohne aktives Zutun des Fahrers aufgrund elektronischer Signale betätigt werden. Diese elektronischen Signale können beispielsweise von einem elektronischen Stabilitätsprogramm (ESC) oder einem Abstandsregelsystem (ACC) ausgegeben werden, so dass der Sollwertgeber einen Sollwert zur Ansteuerung der Druckbereitstellungseinrichtung anhand dieser Signale bestimmt.

Aus der internationalen Patentanmeldung WO 2008/025797 A1 ist ein Bremssystem bekannt, in welchem vorgeschlagen wird, das zur elektrischen Regelung des in einem zur Betätigung des Hauptbremszylinders verwendeten Zwischenraum eingesteuerten Druckes benötigte Druckmittel in der Druckbereitstellungseinrichtung drucklos bereitzuhalten und bei Bedarf unter einen höheren Druck zu setzen, um auf eine aufwändige und energetisch ungünstige Zwischenspeicherung hydraulischer Stellenergie verzichten zu können. Die Druckbereitstellungseinrichtung wird hierzu durch eine Zylinder-Kolben-Anordnung gebildet, deren Kolben durch einen elektromechanischen Aktuator betätigbar ist. Ein Verfahren zur Regelung des Bremssystems, insbesondere der Druckbereitstellungseinrichtung, wird nicht beschrieben.

In der DE 10 2011 076 675 A1 ist ein Verfahren zur Regelung eines elektrohydraulischen Bremssystems für Kraftfahrzeuge mit einer elektronisch ansteuerbaren Druckbereitstellungseinrichtung, welche mit hydraulisch betätigbaren Radbremsen verbunden ist, beschrieben. Die Druckbereitstellungseinrichtung umfasst eine Zylinder-Kolben-Anordnung mit einem hydraulischen Druckraum, deren Kolben durch einen elektromechanischen Aktuator relativ zu einer Ruheposition verschiebbar ist. Zur Regelung werden ein Druck-Istwert und ein Druck-Sollwert bestimmt, die einer Reglervorrichtung als Eingangsgrößen zugeführt werden. Die Zylinder-Kolben-Anordnung wird von der Reglervorrichtung derart angesteuert, dass der Druck-Sollwert in dem hydraulischen Druckraum durch Verschiebung des Kolbens eingestellt wird.

Ein Verfahren zur Regelung einer Bremsanlage gemäß dem Oberbegriff des unabhängigen Anspruchs 1 ist aus der DE 10 2012 200 494 A1 bekannt. Es ist Aufgabe der vorliegenden Erfindung, ein Verfahren zur Regelung einer Bremsanlage für Kraftfahrzeuge sowie eine entsprechende Regelvorrichtung und Bremsanlage bereitzustellen, welches/welche bei kleinen oder mittleren Druck-Sollwerten einen dynamischen Bremsdruckaufbau ermöglicht.

Diese Aufgabe wird erfindungsgemäß durch ein Verfahren gemäß Anspruch 1, eine Regelvorrichtung nach Anspruch 10 und eine Bremsanlage gemäß Anspruch 12 gelöst.

Unter einer Position der Druckbereitstellungseinrichtung wird bevorzugt eine Größe verstanden, welche für eine Position oder Lage oder Stellung des elektromechanischen Aktuators oder des Kolbens der Druckbereitstellungseinrichtung charakteristisch ist.

Bevorzugt wird der elektromechanische Aktuator von einer Regelvorrichtung angesteuert, die abhängig von einem Druck-Istwert ($P_{V,Dach}$) der Druckbereitstellungseinrichtung und dem vorgegebenen Druck-Sollwert ($P_{V,Soll}$) Stellgrößen ($\omega_{Akt,Soll}$, $M_{Akt,soll}$) für den elektromechanischen Aktuator bildet.

Bevorzugt werden der Druck-Istwert ($P_{V,Ist}$) und ein Aktuatorgeschwindigkeit-Istwert ($\omega_{Akt}$) ermittelt, ein Druck-Sollwert ($P_{V,Soll}$) bestimmt und der Druck-Sollwert ($P_{V,Soll}$) und der Druck-Istwert ($P_{V,Ist}$) einer Reglervorrichtung als Eingangsgrößen zugeführt, welche einen Druckregler und einen dem Druckregler nachgeschalteten Geschwindigkeitsregler umfasst, wobei der Druckregler einen Aktuatorgeschwindigkeit-Sollwert ($\omega_{Akt,Soll,DR,Ctrl}$) ausgibt und dem Geschwindigkeitsregler als Eingangsgrößen ein Aktuatorgeschwindigkeit-Sollwert ($\omega_{Akt,Soll}$) und der Aktuatorgeschwindigkeit-Istwert ($\omega_{Akt}$) zugeführt werden.

Weiter ist es bevorzugt, dass der Druckregler einen ersten Aktuatorgeschwindigkeits-Sollwert ($\omega_{Akt,Soll,DR,Ctrl}$) ausgibt, aus dem Druck-Sollwert ($P_{V,Soll}$) ein zweiter Aktuatorgeschwindigkeits-Sollwert ($\omega_{Akt,Soll,DR,FFW}$) bestimmt wird und anhand des ersten und des zweiten Aktuatorgeschwindigkeit-Sollwert ($\omega_{Akt,Soll,DR,Ctrl}$, $\omega_{Akt,Soll,DR,FFW}$) der Eingangs-Aktuatorgeschwin-digkeit-Sollwert ($\omega_{Akt,Soll}$) für den Geschwindigkeitsregler bestimmt wird.

Der erste und der zweite Aktuatorgeschwindigkeits- bzw. Aktuatordrehzahl-Sollwert ($\omega_{Akt,Soll,DR,Ctrl}$, $\omega_{Akt,Soll,DR,FFW}$) werden zu einem Signal ($\omega_{Akt,Soll}$) addiert. Eventuelle Gewichtungen werden in den diese Signale erzeugenden Funktionsblöcken vorgenommen.

Vorteilhafterweise wird das erfindungsgemäße Verfahren in einer Bremsanlage für Kraftfahrzeuge durchgeführt, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Bevorzugt ist die Radbremse bzw. sind die Radbremsen hydraulisch an den Druckraum der Druckbereitstellungseinrichtung angeschlossen. So wird aus dem Druckraum verdrängtes Druckmittelvolumen direkt in die Radbremse(n) verschoben. Zwischen einer, insbesondere jeder, Radbremse und dem Druckraum ist bevorzugt zumindest ein elektrisch ansteuerbares Einlassventil angeordnet, mit welchem die Radbremse von dem Druckraum hydraulisch abtrennbar ist.

Bevorzugt ist die, insbesondere jede, Radbremse, z.B. über ein elektrisch ansteuerbares Auslassventil, mit einem Bremsflüssigkeitsvorratsbehälter verbindbar.

Ebenso ist es bevorzugt, dass der hydraulische Druckraum der Zylinder-Kolben-Anordnung mit einem Bremsflüssigkeitsvorratsbehälter verbunden oder verbindbar ist.

Die Erfindung betrifft auch eine Regelvorrichtung gemäß Anspruch 10 und eine Bremsanlage für Kraftfahrzeuge gemäß Anspruch 12.

Ein Vorteil der Erfindung liegt in der verbesserten (schnelleren) Einstellung eines vorgegebenen, insbesondere kleinen oder mittleren, Druck-Sollwertes in der Druckbereitstellungseinrichtung und damit in der/den Radbremse(n). Ein weiterer Vorteil der Erfindung liegt in der verbesserten Berücksichtigung großer Bremsbelaglüftspiele der Radbremse(n).

Weitere bevorzugte Ausführungsformen der Erfindung ergeben sich aus den Unteransprüchen und der nachfolgenden Beschreibung anhand von Figuren.

Es zeigen schematisch:

Fig. 1 ein Prinzipschaltbild einer beispielsgemäßen Bremsanlage zur Durchführung eines erfindungsgemäßen Verfahrens,

Fig. 2 eine Regelvorrichtung zur Durchführung eines Verfahrens zur Regelung einer Bremsanlage,

Fig. 3 eine beispielsgemäße Regelvorrichtung zur Durchführung eines erfindungsgemäßen Verfahrens,

Fig. 4 ein Ausführungsbeispiel des erfindungsgemäßen Verfahrens,

Fig. 5 ein Ausführungsbeispiel des erfindungsgemäßen Verfahrens, und

Fig. 6 ein Ausführungsbeispiel des erfindungsgemäßen Verfahrens.

Bevorzugt betrifft das erfindungsgemäße Verfahren ein Regelungskonzept zur verbesserten (schnelleren) Einstellung von vorgegebenen Solldrücken mittels eines elektromotorisch angetriebenen Kolbens in einem aktiven, fremdbetätigten Bremssystem. Insbesondere wird hierbei die Verbesserung der Druckaufbaudynamik bei kleineren und mittleren Druckanforderungen betrachtet. Eine ebenfalls dargestellte Erweiterung behandelt die besondere Berücksichtigung großer Bremsbelaglüftspiele bei der Verbesserung der Druckaufbaudynamik.

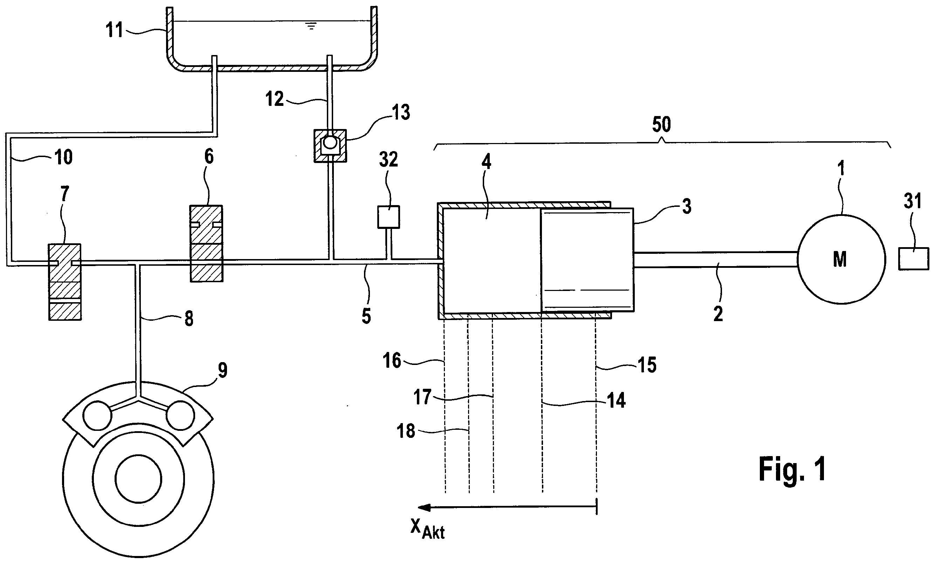

Fig. 1 zeigt das vereinfachte Prinzip eines aktiven Bremssystems für ein geregeltes Rad eines hydraulisch gebremsten Fahrzeugs. Das erfindungsgemäße Verfahren wird bevorzugt in einem aktiven, fremdbetätigbaren Bremssystem durchgeführt, bei dem der Fahrer, z.B. mittels Bremspedalweg, eine Druckanforderung stellt und diese elektronisch mit Hilfe einer Druckbereitstellungseinrichtung 50, z.B. umfassend einen Elektromotor bzw. Aktuator 1, ein geeignetes Getriebe 2 und einen einen hydraulischen Druckraum 4 begrenzenden Kolben 3, umgesetzt wird, indem der Kolben 3 um einen Weg $X_{Akt}$ aus einer Ruheposition 15 in eine Position 14 fährt, sodass ein bestimmtes Volumen der Bremsflüssigkeit aus dem Druckraum 4 über die Leitung 5 und ein zunächst geöffnetes Einlassventil 6 in die Bremsleitung 8 und somit in die Radbremse 9 verschoben wird. Damit wird in der Radbremse 9 nach Überwindung des Belaglüftspiels ein Bremsdruck erzeugt. Ein Bremsdruckabbau kann erfolgen, indem der Kolben 3 wieder in Richtung der Ruheposition 15 zurückgefahren wird. Ein schneller Bremsdruckabbau, wie er z.B. im Falle einer ABS-Regelung benötigt wird, ist aber auch über die Ventilkombination 6, 7 möglich, indem das Einlassventil 6 geschlossen und das Auslassventil 7 für eine bestimmte Zeit geöffnet wird. Dann strömt Bremsflüssigkeit aus der Radbremse 9 über Leitung 8 durch das Auslassventil 7 und somit über die Leitung 10 in den Bremsflüssigkeitsbehälter 11. Diese Maßnahme des Druckabbaus ist insbesondere dann sinnvoll, wenn der Druckraum 4 mehrere Radbremsen parallel bedient.

Außerdem ist beispielsgemäß eine Messeinrichtung 31 vorgesehen, mittels welcher eine Position der Druckbereitstellungseinrichtung 50, welche für eine Position oder Lage oder Stellung des Aktuators 1 und damit des Kolbens 3 der Druckbereitstellungseinrichtung 30 charakteristisch ist, erfasst wird. Messeinrichtung 31 kann z.B. einen Rotorlagewinkel des Elektromotors 1 oder eine Spindelposition eines Rotations-Translations-Getriebes oder auch den Weg

$X_{Akt}$ des Kolbens 3 aus seiner Ruheposition 15 erfassen. Alternativ kann die Position der Druckbereitstellungseinrichtung 50 auch aus anderen Größen, z.B. anhand eines Modells, bestimmt werden.

Außerdem ist beispielsgemäß eine Druckmesseinrichtung 32 vorgesehen, mittels welcher der Ist-Druck $P_{V,Ist}$, d.h. der Druck im Druckraum 4 der Druckbereitstellungseinrichtung 50 gemessen wird.

Aus Gründen der Sicherheit und der schnellen Fehlererkennung wird/werden die Messgröße $X_{Akt}$ und/oder die Messgröße $P_{V,Ist}$ vorteilhafterweise redundant ermittelt. Dazu kann die entsprechende Messeinrichtung 31, 32 eigensicher ausgeführt sein oder es können entsprechend zwei redundante Messeinrichtungen vorhanden sein.

Grundsätzlich kann das in Fig. 1 dargestellte Bremssystem um beliebig viele Radbremsen 9 erweitert werden, indem mehrere Leitungen 5 zu den Radkreisen geführt werden, wobei jeder Radkreis bevorzugt über ein individuelles Ventilpaar 6, 7 verfügt.

Um aus Sicherheitsgründen eine Mehrkreisigkeit des Systems zu bilden, können mehrere Kolben 3 und mehrere Druckräume 4 vorgesehen werden. Für einen PKW ist eine Zweikreisigkeit sinnvoll, wobei jeweils zwei Radbremsen mit einer von zwei Druckkammern verbunden sind.

Gegenüber der vereinfachten Darstellung des Systems in Fig. 1 sind zahlreiche Verbesserungen und verschiedene Ausführungsformen des Prinzips denkbar, z.B. bei der Wahl der Ventile. Auch kann zwischen dem hydraulischen Druckraum 4 und der/den Radbremse(n) 9 z.B. ein Hauptbremszylinder angeordnet sein, so dass der in dem Druckraum 4 erzeugte Druck einem hydraulischen Zwischenraum, z.B. in einer Betätigungseinrichtung, zugeführt wird, wodurch der Hauptbremszylinder betätigt wird.

Die Erfindung befasst sich mit der Aufgabe der Einstellung geeigneter Drücke im Druckraum 4.

Die Notwendigkeit, einen vorgegebenen Druck bzw. Druckverlauf mit Hilfe eines Regelungsverfahrens einzustellen, ergibt sich immer dann, wenn der Fahrer mittels Betätigung des Bremspedals einen allgemeinen Bremsdruck für alle Räder des Kraftfahrzeugs anfordert, oder wenn diese Druckanforderung durch eine Assistenzfunktion ACC (adaptive cruise control), HSA (hill start assist), HDC (hill descent control) etc. gestellt wird, oder wenn eine spezielle radindividuelle Bremsenregelfunktion aktiv wird, wie beispielsweise ABS (Antiblockiersystem), TCS (Traction Control System) oder ESP (Elektronisches Stabilitätprogramm).

In allen Fällen gilt, dass vorteilhafterweise der Druck des Druckraums 4 so einzustellen ist, dass das Rad mit der höchsten Bremsdruckanforderung sicher mit dem notwendigen Druck versorgt werden kann. Bezüglich der Dynamik des einzustellenden Druckes bzw. Druckverlaufes gilt, dass im Rahmen der verfügbaren Dynamik des Aktuators 1 ein möglichst geringer zeitlicher Verzug zwischen der gestellten Druckanforderung und dem sich einstellenden Druck im Vordruckraum 4 anzustreben ist. Dies gilt insbesondere auch dann, wenn der Aktuator 1 sich zu Beginn der Druckanforderung in seiner Ruheposition 15 befindet und daher zum Einstellen des geforderten Druckes zunächst das Belaglüftspiel überwinden muss. Dabei verschiebt der Aktuator zunächst ein, von der Größe der eingesetzten Radbremsen 9 und des eingestellten Belaglüftspiels abhängiges Volumen aus dem Druckraum 4 in die Radbremsen, um die Beläge, z.B. an die Bremsscheibe, anzulegen. Während dieses Vorgangs wird allerdings noch kein Bremsdruck in den Radbremsen 9 aufgebaut. Insbesondere unter Beachtung der Anforderung nach einem möglichst guten Ansprechverhalten ergibt sich hier (unabhängig von der Größe des eingestellten Lüftspiels) auch die Anforderung, einen, im Rahmen der verfügbaren Aktuatordynamik, möglichst schnellen Druckaufbau auch bei kleinen Druckanforderungen zu realisieren.

Im Hinblick auf das Regelungsverfahren zum Einstellen des geforderten Vordruckes bedeutet dies, dass für die Druckregelung Maßnahmen vorzusehen sind, so dass die Zeit zwischen dem Stellen einer Druckanforderung und dem Beginn des Druckaufbaus in den betrachteten Radbremsen möglichst kurz ist. Dies gilt insbesondere für schnelle Druckaufbauanforderungen auf ein niedriges bis mittleres Druckniveau. Bei Verwendung eines linearen Regleransatzes kann es hierbei vorkommen, dass in diesem Solldruckbereich nicht die volle verfügbare Dynamik des Linearaktuators ausgenutzt wird.

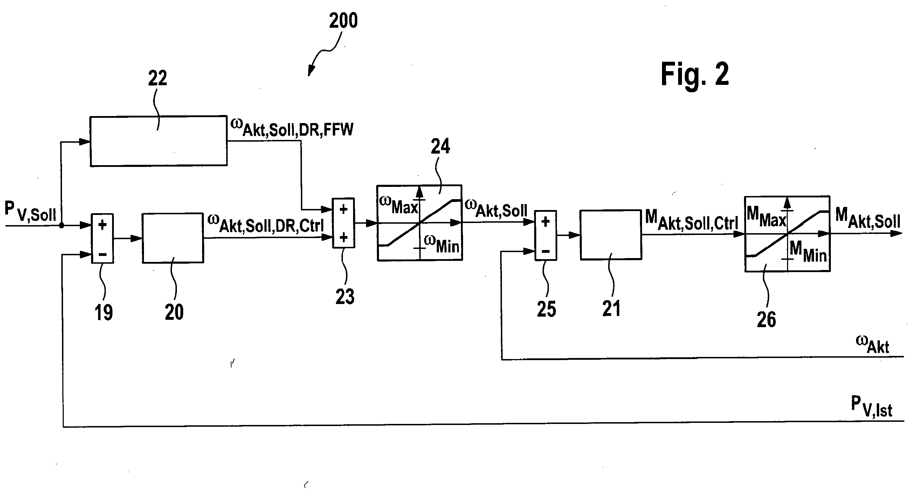

Eine Grundstruktur einer Regelvorrichtung 200 zum Einstellen eines geforderten Drucks bzw. Druckverlaufs zeigt Fig. 2. Es handelt sich um einen Druckregler 20, dem ein Aktuatorgeschwindigkeitsregler (vorteilhafterweise Motordrehzahlregler) 21 unter Zwischenschaltung weiterer Schaltungselemente 23 - 25 unterlagert ist. Dabei wird dem Druckregler 20 das Ergebnis $\Delta P_V$ einer in einem Subtraktionsglied 19 durchgeführten Subtraktion zwischen dem geforderten Druck-Sollwert $P_{V,Soll}$ und dem gegenwärtig vorliegenden Druck-Istwert $P_{V,Ist}$ zugeführt. Die Ausgangsgröße des Druckreglers 20 ist der Sollwert für die Aktuatordrehzahl $\omega_{Akt,Soll,DR,Crl}$, der unter Berücksichtigung von vorgegebenen minimalen und maximalen Aktuatordrehzahlwerten $\omega_{Min}$, $\omega_{Max}$ dem Drehzahlregler 21 als Eingangsgröße übergeben wird. Der Druck-Sollwert $P_{V,Soll}$ ergibt sich aufgrund der in den vorangegangenen Abschnitten beschriebenen Anforderungen. Der Druck-Istwert $P_{V,Ist}$ wird bevorzugt mittels eines Drucksensors (32 in Fig. 1) gemessen. Dieser Drucksensor 32 erfaßt den Druck am Ausgang des Druckraumes 4. Dabei ist zu beachten, dass insbesondere die bei schnellen Druckaufbauten auftretenden Staudrücke an den zwischen dem Druckraum 4 und den Radbremsen 9 befindlichen Ventilen (z.B. 6) hierdurch ebenfalls gemessen werden.

Als Reglerübertragungsverhalten ist üblicherweise ein proportional wirkender Regler (P-Regler) ausreichend. Zur Erhöhung der Druckreglerdynamik ist beispielsgemäß eine Geschwindigkeitsvorsteuerung 22 vorgesehen. Diese bestimmt aus dem angeforderten Druck-Sollwert $P_{V,Soll}$ durch (zeitliche) Differentiation eine Solldruckgeschwindigkeit, die mit einem Verstärkungsfaktor ($K_P$) gewichtet einen zusätzlichen Anteil $\omega_{Akt,Soll,DR,FFW}$ ($\omega_{Akt,Soll,DR,FFW}$ = $K_P$ * $dP_{V,Soll}$/dt) dem Aktuatordrehzahl-Sollwert des Druckreglers 20 $\omega_{Akt,Soll,DR,Ctrl}$ überlagert. Die beiden Solldrehzahlanteile werden in einem Addierer 23 zusammen addiert und einer Begrenzungsfunktion 24 zur Begrenzung auf die minimal bzw. maximal zulässige Solldrehzahl ($\omega_{Min}$, $\omega_{Max}$) zugeführt. Die Ausgangsgröße des Druckreglers 20, 24 ist der Sollwert für die Motordrehzahl $\omega_{Akt,Soll}$, der dem Drehzahlregler 21, 25 als Eingangsgröße übergeben wird.

Der begrenzte Aktuatordrehzahl-Sollwert $\omega_{Akt,Soll}$ wird in einem weiteren Subtraktionsglied 25 zur Bildung einer Aktuatordrehzahl-Sollwertdifferenz $\Delta\omega_{Soll}$ mit dem Aktuatordrehzahl-Istwert $\omega_{Akt}$ verglichen. Die Aktuatordrehzahl-Sollwertdifferenz $\Delta\omega_{Soll}$ wird dem vorhin erwähnten Drehzahlregler 21 als Eingangsgröße zugeführt, dessen Ausgangsgröße einem Sollwert $M_{Akt,Soll,Ctrl}$ des vom Aktuator aufzubringenden Drehmoments entspricht. Der Drehmoment-Sollwert $M_{Akt,Soll,Ctrl}$ wird schließlich in einem zweiten Begrenzungsmodul 26 auf den minimal bzw. maximal zulässigen Momentenwert $M_{min}$, $M_{max}$ begrenzt und ergibt den Drehmomenten-Sollwert $M_{Akt,Soll}$ für den Elektromotor. Weitere Eingangsgröße des Drehzahlreglers, der üblicherweise proportional-integrierendes (PI-) Verhalten aufweist, ist die Istdrehzahl $\omega_{Akt}$ des Aktuators, die bevorzugt aus der, z.B. zu Kommutierungszwecken meßtechnisch verfügbaren, Aktuatorposition $X_{Akt}$ (Messeinrichtung 31 in Fig. 1) ermittelt wird.

Die oben erwähnten Staudrücke wirken sich auf die Druckregelung störend aus und führen zur Vermeidung von Schwingungen zu einer etwas vorsichtigeren Abstimmung des Druckreglers. Solange für den Druckregler keine Begrenzungsfunktion aktiv ist, wird er in seinem linearen Bereich betrieben, was dazu führt, dass kleine Regelabweichungen auch nur zu kleinen Solldrehzahlen führen. In beiden Fällen wird daher insbesondere für schnelle Druckaufbauanforderungen aus dem unbetätigten Zustand auf ein niedriges bis mittleres Druckniveau nicht die volle verfügbare Dynamik des Linearaktuators 50 ausgenutzt.

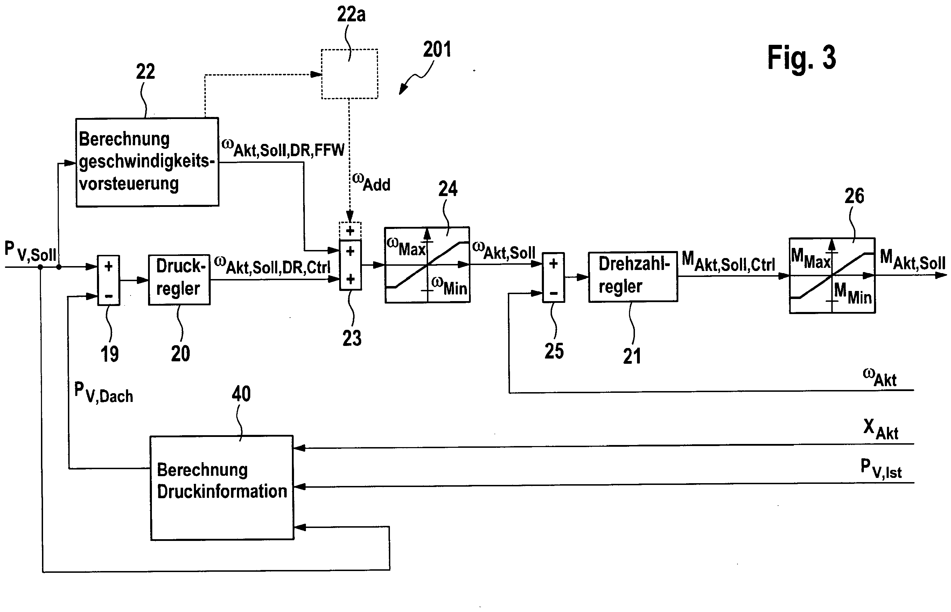

In Fig. 3 ist eine beispielsgemäße Regelvorrichtung 201 zur Durchführung eines erfindungsgemäßen Verfahrens dargestellt, welche die oben genannten Nachteile behebt und das Regelverhalten signifikant verbessert.

Beispielsgemäß wird als Druck-Istwert für die Druckregelung nicht grundsätzlich der sensorisch erfasste Istdruck $P_{V,Ist}$ betrachtet, sondern ein ermittelter Wert $P_{V,Dach}$ verwendet. Beispielsgemäß wird der Druck-Istwert $P_{V,Dach}$ in dem Modul zur Berechnung der Druckinformation (Block 40) bestimmt.

Für das Drucksignal $P_{V,Dach}$ gilt beispielsgemäß folgender Zusammenhang:

$$P_{V,Dach} = (1-\lambda) * P_{V,Ist} + \lambda * P_{V,Modell} \tag{1}$$

Der Druck-Istwert $P_{V,Dach}$ ergibt sich aus einer mit dem Faktor $\lambda$ ($\lambda$=0, .., 1) gewichteten Addition der zwei Drucksignale $P_{V,Ist}$ und $P_{V,Modell}$, wobei das eine Signal das bereits erwähnte gemessene Drucksignal $P_{V,Ist}$ repräsentiert. Das zweite Signal $P_{V,Modell}$ ist ein berechneter Modelldruck, der aufgrund des gemessenen Wegs $X_{Akt}$ ermittelt wird, wobei als Modell eine statische Kennlinie oder Funktion (f($X_{Akt}$)) berechnet wird, die die Bremsanlage charakterisierende Abhängigkeit des Ist-Drucks ($P_{V,Ist}$) von der Position ($X_{Akt}$) der Druckbereitstellungsein-richtung 50 darstellt. Mittels des Gewichtungsfaktors $\lambda$ wird festgelegt, welcher Signalanteil wie stark der Druckregelung (in Form des Druck-Istwerts $P_{V,Dach}$) zugeführt wird.

Beispielsweise ist die (vorgegebene) Kennlinie $P_{V,Modell}$ = f($X_{Akt}$) bis zu einem vorgegebenen Positionsgrenzwert $X_0$ gleich Null (d.h. für $X_{Akt} \leq X_0$ ist $P_{V,Modell}$=0) und steigt dann mit wachsendem $X_{Akt}$ an.

Der Gewichtungsfaktor $\lambda$ wird in Abhängigkeit des geforderten Solldruckes $P_{V,Soll}$ und vorteilhafterweise zusätzlich in Abhängigkeit des geforderten Solldruckgradienten $dP_{V,Soll}$ / dt der sich durch die zeitliche Ableitung des Solldruckes $P_{V,Soll}$ ergibt, ermittelt.

Im Folgenden wird ein Ausführungsbeispiel des erfindungsgemäßen Verfahrens beschrieben, insbesondere eine beispielsgemäße Bestimmung eines Gewichtungsfaktors $\lambda$.

Ist der Solldruck $P_{V,Soll}$ größer als ein erster vorgegebener Druckwert $P_2$ ($P_{V,Soll}$ > $P_2$), so wird immer mit dem Sensorsignal Istdruck $P_{V,Ist}$ geregelt, d.h. der Gewichtungsfaktor $\lambda$ ist Null, $\lambda$ = 0, und $P_{V,Dach}$ = $P_{V,Ist}$.

Ist der Solldruck $P_{V,Soll}$ gleich oder kleiner als der erste vorgegebene Druckwert $P_2$ ($P_{V,Soll} \leq P_2$), so wird zusätzlich der geforderte Solldruckverlauf $dP_{V,Soll}$ / dt betrachtet.

Überschreitet der Solldruckverlauf $dP_{V,Soll}$ / dt eine vordefinierte zweite Schwelle $S_2$, ist also $dP_{V,Soll}$ / dt > $S_2$, so wird $\lambda$ = 1 und die Druckregelung bildet die Regelabweichung mittels der erwähnten Modellgröße $P_{V,Modell}$.

Zur Vermeidung von unerwünschten scharfen Übergängen von $P_{V,Ist}$ nach $P_{V,Modell}$ (oder andersherum) werden auch Zwischenwerte für den Faktor $\lambda$ vorgegeben.

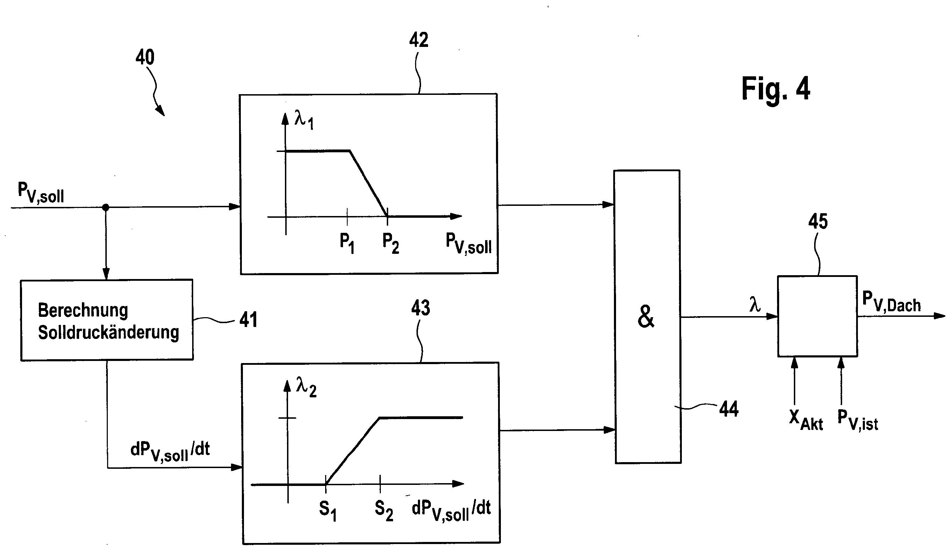

Eine Präzisierung des Ausführungsbeispiels zur Bestimmung des Gewichtungsfaktors $\lambda$, wie es in Modul 40 umgesetzt sein kann, ist in Fig. 4 dargestellt. Hierbei wird in Block 42 anhand einer vorgegebenen Kennlinie in Abhängigkeit von dem Solldruck $P_{V,Soll}$ ein erster Parameter $\lambda_1$ bestimmt. In Block 43 wird anhand einer weiteren vorgegebenen Kennlinie in Abhängigkeit von der Solldruckableitung $dP_{V,Soll}$ / dt ein zweiter Parameter $\lambda_2$ bestimmt. Der Gewichtungsfaktors $\lambda$ wird in Block 44 als Produkt der beiden Parameter $\lambda_1$ und $\lambda_2$ bestimmt ($\lambda$ = $\lambda_1$ * $\lambda_2$). In Block 45 wird anhand des Gewichtungsfaktors λ und des Zusammenhangs der Gleichung (1) der Druck-Istwert $P_{V,Dach}$ gerechnet.

Ist der Solldruck $P_{V,Soll}$ größer als ein erster vorgegebener Druckwert $P_2$ ($P_{V,Soll} > P_2$), so ist $\lambda_1=0$ und damit $\lambda=0$ (unabhängig von $\lambda_2$). Ist der Solldruck $P_{V,Soll}$ gleich oder kleiner als ein zweiter vorgegebener Druckwert $P_1$, so ist $\lambda_1=1$. Für Solldruckwerte $P_{V,Soll}$ zwischen den Druckwerten $P_1$ und $P_2$ nimmt $\lambda_1$ beispielsgemäß linear mit $P_{V,Soll}$ ab. Unterschreitet der Solldruckverlauf $dP_{V,Soll}$ / dt eine vordefinierte erste Schwelle $S_1$ (d.h. es wird nur ein langsamer Druckaufbau angefordert), so ist $\lambda_2=0$ und damit $\lambda=0$, d.h. es wird mit dem Sensorsignal Istdruck $P_{V,Ist}$ geregelt. Überschreitet der Solldruckverlauf $dP_{V,Soll}$ / dt eine vordefinierte zweite Schwelle $S_2$ (d.h. es wird ein sehr schneller Druckaufbau angefordert), so ist $\lambda_2=1$. Für kleine Solldrücke $P_{V,Soll}$ (d.h. $P_{V,Soll} < P_1$) ist dann $\lambda=1$ (Maximalwert), d.h. es wird mit dem Modellsignal $P_{V,Modell}$ geregelt, so dass durch Staueffekte beeinflusste (zu große), gemessene Istdrücke $P_{V,Ist}$ keinen Einfluss auf die Druckregelung nehmen. Zur Vermeidung von unerwünschten scharfen Übergängen bei der Ermittlung des Gewichtungsfaktors λ werden im Bereich zwischen $P_1$ und $P_2$ (für $P_{V,Soll}$) bzw. zwischen $S_1$ und $S_2$ (für $dP_{V,Soll}$ / dt) Zwischenwerte für die Parameter $\lambda_1$ und $\lambda_2$ und damit den Faktor λ ermittelt.

Der Druckwert $P_2$ kann z.B. mehrere 10bar betragen. Die Schwelle $S_2$ kann z.B. im Bereich von ein oder wenigen 100bar/sec liegen.

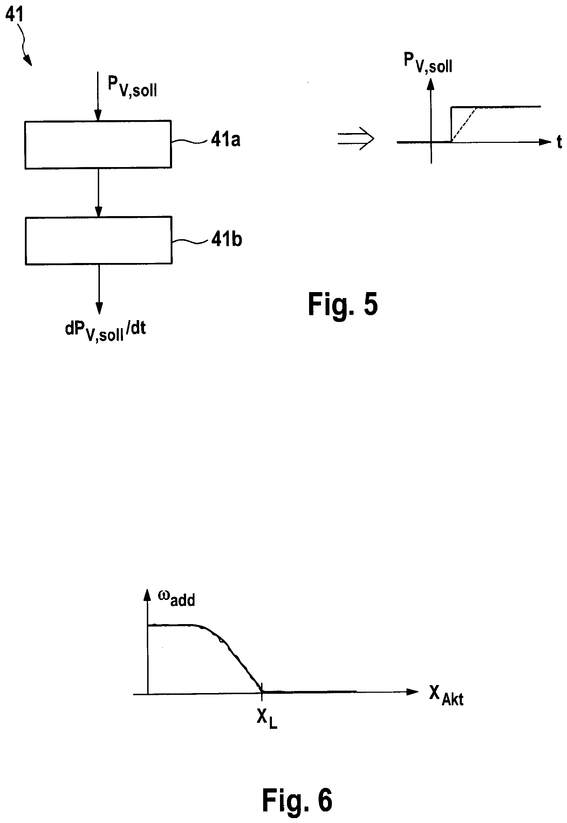

Der geforderte Solldruckverlauf $dP_{V,Soll}$ / dt wird in Block 41 bestimmt. In Fig. 5 ist ein beispielsgemäßes Verfahren zur Bestimmung von $dP_{V,Soll}$ / dt dargestellt. Bevorzugt wird der geforderte Solldruckverlauf $dP_{V,Soll}$ / dt mit Hilfe eines differenzierenden Filters (Block 41b) ermittelt, wobei vorteilhafterweise zusätzlich eine Anstiegsbegrenzungsfunktion (optionaler Block 41a) eingeführt wird, so dass auch sprungförmige Änderungen der Druckanforderung $P_{V,Soll}$ zu einem endlichen Solldruckgradienten $dP_{V,Soll}$ / dt führen. In Block 41a wird eine sprungförmige Druckanforderung $P_{V,Soll}$ (durchgezogener Strich in dem rechten Diagramm $P_{V,Soll}$ als Funktion der Zeit t) in eine Druckanforderung $P_{V,Soll}$ mit z.B. linearem Anstieg (gestrichelter Strich in dem rechten Diagramm $P_{V,Soll}$ als Funktion der Zeit t) umgewandelt.

Durch die beschriebenen Maßnahmen wird erreicht, dass bei langsamen Druckanforderungen der Druckregler immer mit dem gemessenen Drucksensorsignal arbeitet, während bei schnellen Druckanforderungen bis zu einer bestimmten Druckhöhe zunächst auf dem Modellsignal geregelt und erst zur Ausregelung des statischen Zieldruckes das Sensorsignal verwendet wird, wodurch die stationäre Genauigkeit der Druckregelung wieder erreicht wird.

Der Übergang des Druckregelsignals $P_{V,Dach}$ vom Modellsignal $P_{V,Modell}$ auf den gemessenen Druckwert $P_{V,Ist}$ wird durch den Gewichtungsfaktor λ definiert, der beispielsweise entsprechend der in Fig. 4 dargestellten Anordnung ermittelt wird. Dadurch wird insbesondere der auf die Druckregelung störend wirkende Einfluss der eingangs erwähnten Staudrücke minimiert, was zu einer Erhöhung der Druckaufbaudynamik führt. Weiterhin kann aufgrund dessen die Parametrisierung des Druckreglers wesentlich stärker in Hinblick auf verbessertes Führungsverhalten vorgenommen werden.

Zu einem verbesserten Ansprechverhalten, insbesondere bei Verwendung von Radbremsen mit einem vergrößerten Belaglüftspiel, wird zur schnelleren Überwindung dieses Lüftspiels bevorzugt eine zusätzliche Erweiterung der in Fig. 2 dargestellten Reglerstruktur herangezogen, welche eine Erweiterung der Geschwindigkeitsvorsteuerung betrifft und in Fig. 3 gestrichelt dargestellt ist (Block 22a und Anbindungen). Neben der bereits erwähnten Vorsteuerdrehzahl $\omega_{Akt,Soll,DR,FFW}$, die sich aufgrund des Solldruckgradienten ergibt (Block 22), wird beispielsgemäß eine zusätzliche Motordrehzahlkomponente $\omega_{add}$ als Vorsteuergröße vorgesehen (Block 22a), die beispielsweise von der Größe des zu überwindenden Lüftspiels ($X_L$) abhängt. Diese zusätzliche Motordrehzahlkomponente $\omega_{add}$ wird bei einem angeforderten Druckaufbau der Vorsteuerdrehzahl $\omega_{Akt,Soll,DR,FFW}$ additiv überlagert, solange das Lüftspiel ($X_L$) noch nicht überwunden ist. Eine beispielsgemäße Kennlinie für die Motordrehzahlkomponente $\omega_{add}$ als Funktion des aktuell gemessenen Aktuator-weges $X_{Akt}$ ist in Fig. 6 dargestellt. Der Grenzwert $X_L$ entspricht vorteilhafterweise dem Wert Positionsgrenzwert $X_0$ des zugrunde liegenden Modells (siehe oben Kennlinie $P_{V,Modell} = f(X_{Akt})$). Die Größe der zusätzlichen Drehzahlkomponente $\omega_{add}$ kann auch (zusätzlich) abhängig vom angeforderten Solldruckgradienten $dP_{V,Soll}$/dt vorgegeben sein.

## Patentansprüche

**1.** Verfahren zur Regelung einer Bremsanlage für Kraftfahrzeuge mit einer hydraulisch betätigbaren Radbremse (9), welche mittels einer elektronisch steuerbaren Druckbereitstellungseinrichtung (50) betätigbar ist, die eine Zylinder-Kolben-Anordnung mit einem hydraulischen Druckraum (4) umfasst, deren Kolben (3) durch einen elektromechanischen Aktuator (1) verschiebbar ist, so dass ein vorgegebener Druck-Sollwert ($P_{V,Soll}$) in dem hydraulischen Druckraum (4) einstellbar ist, wobei eine Position ($X_{Akt}$) der Druckbereitstellungseinrichtung (50) erfasst wird (31), und wobei mittels einer Messeinrichtung (32) ein Ist-Druck ($P_{V,Ist}$) der Druckbereitstellungseinrichtung (50) bestimmt wird, wobei Stellgrößen ($\omega_{Akt,Soll}$, $M_{Akt,soll}$) für den elektromechanischen Aktuator (1) anhand des vorgegebenen Druck-Sollwerts ($P_{V,Soll}$) und eines Druck-Istwerts ($P_{V,Dach}$) gebildet werden, **dadurch gekennzeichnet dass** der Druck-Istwert ($P_{V,Dach}$) in Abhängigkeit von dem Druck-Sollwert ($P_{V,Soll}$) durch gewichtete Addition des Ist-Drucks ($P_{V,Ist}$) und eines aus einer aktuellen Position ($X_{Akt}$) der Druckbereitstellungseinrichtung berechneten Modell-Drucks

$(P_{V,Mod})$ bestimmt wird.

2. Verfahren nach Anspruch 1, **dadurch gekennzeichnet, dass** der Druck-Istwert $(P_{V,Dach})$ in Abhängigkeit von der zeitlichen Ableitung des vorgegebenen Druck-Sollwerts $(dP_{V,Soll}/dt)$ bestimmt oder gewählt wird (40, 43).

3. Verfahren nach Anspruch 1 oder 2, **dadurch gekennzeichnet, dass** ein Gewichtsfaktor $(\lambda)$ für die gewichtete Addition in Abhängigkeit von dem Druck-Sollwert $(P_{V,Soll})$ bestimmt wird (42) .

4. Verfahren nach Anspruch 3, **dadurch gekennzeichnet, dass** der Gewichtsfaktor $(\lambda)$ für die gewichtete Addition in Abhängigkeit von der zeitlichen Ableitung des vorgegebenen Druck-Sollwerts $(dP_{V,Soll}/dt)$ bestimmt wird (43).

5. Verfahren nach einem der Ansprüche 1 bis 4, **dadurch gekennzeichnet, dass** der Druck-Istwert $(P_{V,Dach})$ gleich dem Ist-Druck $(P_{V,Ist})$ ist, wenn der Druck-Sollwert $(P_{V,Soll})$ oberhalb eines vorgegebenen Druck-Schwellenwertes $(P_2)$ liegt.

6. Verfahren nach einem der Ansprüche 2 bis 5, **dadurch gekennzeichnet, dass** die zeitliche Ableitung des vorgegebenen Druck-Sollwerts $(dP_{V,Soll} / dt)$ mit einem vorgegebenen Schwellenwert $(S_1, S_2)$ verglichen wird, wenn der Druck-Sollwert $(P_{V,Soll})$ unterhalb des vorgegebenen Druck-Schwellenwertes $(P_2)$ liegt.

7. Verfahren nach einem der Ansprüche 1 bis 6, **dadurch gekennzeichnet, dass** der Druck-Istwert $(P_{V,Dach})$ gleich dem Modell-Druck $(P_{V,Mod})$ ist, wenn die zeitliche Ableitung des vorgegebenen Druck-Sollwerts $(dP_{V,Soll}/dt)$ oberhalb des vorgegebenen Schwellenwertes $(S_2)$ liegt und wenn der Druck-Sollwert $(P_{V,Soll})$ unterhalb eines vorgegebenen zweiten Druck-Schwellenwertes $(P_1)$ liegt.

8. Verfahren nach einem der Ansprüche 1 bis 7, **dadurch gekennzeichnet, dass** der Modell-Druck $(P_{V,Mod})$ gemäß einer vorgegebenen Kennlinie oder Funktion $(f(X_{Akt}))$ berechnet wird, die die Bremsanlage charakterisierende Abhängigkeit des Ist-Drucks $(P_{V,Ist})$ von der Position $(X_{Akt})$ der Druckbereitstellungseinrichtung (50) darstellt.

9. Verfahren nach einem der Ansprüche 1 bis 8, **dadurch gekennzeichnet, dass** der Druck-Sollwert $(P_{V,Soll})$ und der Druck-Istwert $(P_{V,Dach})$ einem Druckregler (20) mit einem nachgeschalteten Geschwindigkeitsregler (21) zugeführt werden, wobei eine Geschwindigkeitsvorsteuerung (22a) vorgesehen ist, deren Ausgangsgröße $(\omega_{add})$ in Abhän-gigkeit der aktuellen Position $(X_{Akt})$ der Druckbereitstellungseinrichtung (50) bestimmt wird.

10. Regelvorrichtung (201), welche abhängig von einem Druck-Istwert $(P_{V,Dach})$ und einem vorgegebenen Druck-Sollwert $(P_{V,Soll})$ Stellgrößen $(\omega_{Akt,Soll}, M_{Akt,Soll})$ für einen elektromechanischen Aktuator (1) bildet, mit einem Druckregler (20) und einen dem Druckregler nachgeschalteten Geschwindigkeitsregler (21), wobei dem Geschwindigkeitsregler (21) als Eingangsgrößen die einen Aktuatorgeschwindigkeit-Sollwert darstellende Stellgröße $(\omega_{Akt,Soll})$ und ein Ak-tuatorgeschwindigkeit-Istwert $(\omega_{Akt})$ zugeführt werden, **dadurch gekennzeichnet, dass** Mittel (40) vorgesehen sind, welche den Druck-Istwert $(P_{V,Dach})$ nach einem der Ansprüche 1 bis 9 bestimmen und dem Druckregler (20) zuführen.

11. Regelvorrichtung (201) nach Anspruch 10, **dadurch gekennzeichnet, dass** der Druckregler (20) einen ersten Aktuatorgeschwindigkeit-Sollwert $(\omega_{Akt,Soll,DR,Ctrl})$ ausgibt, aus dem Druck-Sollwert $(P_{V,Soll})$, insbesondere der zeitlichen Ableitung des Druck-Sollwerts, ein zweiter Aktuatorgeschwindigkeit-Sollwert $(\omega_{Akt,Soll,DR,FFW})$ bestimmt wird (22), zumindest aus der Position $(X_{Akt})$ der Druckbereitstellungseinrichtung (50) ein dritter Aktuatorgeschwindigkeit-Sollwert $(\omega_{add})$ bestimmt wird (22a), und anhand des ersten, des zweiten und des dritten Aktuatorgeschwindigkeit-Sollwert $(\omega_{Akt,Soll,DR,Ctrl}, \omega_{Akt,Soll,DR,FFW}, \omega_{add})$ die den Aktuatorgeschwindigkeit-Sollwert darstellende Stellgröße $(\omega_{Akt,Soll})$ für den Geschwindigkeitsregler (21) bestimmt wird

12. Bremsanlage für Kraftfahrzeuge mit zumindest einer hydraulisch betätigbaren Radbremse (9), mit einer elektronisch ansteuerbaren Druckbereitstellungseinrichtung (50) zur Betätigung der Radbremse (9), die eine Zylinder-Kolben-Anordnung mit einem hydraulischen Druckraum (4) umfasst, deren Kolben (3) durch einen elektromechanischen Aktuator (1) verschiebbar ist, mit einer Messeinrichtung (32) zur Bestimmung eines Ist-Drucks $(P_{V,Ist})$ der Druckbereitstellungseinrichtung (50), mit Mitteln, die direkt oder indirekt eine Position $(X_{Akt})$ der Druckbereitstellungseinrichtung (50), insbesondere des Aktuators (1), bestimmen, und mit einer elektronischen Steuer- und Regeleinheit zur Ansteuerung des elektromechanischen Aktuators (1), **dadurch gekennzeichnet, dass** die elektronische Steuer- und Regeleinheit (33) eine Regelvorrichtung (201) nach Anspruch 10 oder 11 umfasst, welche abhängig von einem Druck-Istwert $(P_{V,Dach})$ und dem vorgegebenen Druck-Sollwert $(P_{V,Soll})$ Stellgrößen $(\omega_{Akt,Soll}, M_{Akt,soll})$ für den elektromechanischen Aktuator (1) bildet, wobei Mittel (40) vorgesehen sind, mittels derer ein Verfahren gemäß einem der Ansprüche 1 bis 9 durchgeführt wird.

**Claims**

1. Method for controlling a braking system for motor vehicles, comprising a hydraulically actuable wheel brake (9) which can be actuated by means of an electronically controllable pressure supply device (50) which comprises a cylinder-piston arrangement with a hydraulic pressure chamber (4), the piston of which can be displaced by an electromechanical actuator (1), with the result that a predefined setpoint pressure value ($P_{V,Setp}$) in the hydraulic pressure chamber (4) can be adjusted, wherein a position ($X_{Akt}$) of the pressure supply device (50) is detected (31), and wherein an actual pressure ($P_{V,Act}$) of the pressure supply device (50) is determined by means of a measuring device (32), wherein manipulated variables ($\omega_{Akt,Setp}$, $M_{Akt,Setp}$) for the electromechanical actuator (1) are formed on the basis of the predefined setpoint pressure value ($P_{V,Setp}$) and an actual pressure value ($P_{V,Dach}$), **characterized in that** the actual pressure value ($P_{V,Dach}$) is determined as a function of the setpoint pressure value ($P_{V,Setp}$) by weighted addition of the actual pressure ($P_{V,Act}$) and of a model pressure ($P_{V,Mod}$) calculated from a current position ($X_{Akt}$) of the pressure supply device.

2. Method according to Claim 1, **characterized in that** the actual pressure value ($P_{V,Dach}$) is determined or selected (40, 43) as a function of the time derivative of the predefined setpoint pressure value ($dP_{V,Setp}/dt$).

3. Method according to Claim 1 or 2, **characterized in that** a weighting factor ($\lambda$) for the weighted addition is determined (42) as a function of the setpoint pressure value ($P_{V,Setp}$).

4. Method according to Claim 3, **characterized in that** the weighting factor ($\lambda$) for the weighted addition is determined (43) as a function of the time derivative of the predefined setpoint pressure value ($dP_{V,Setp}/dt$).

5. Method according to one of Claims 1 to 4, **characterized in that** the actual pressure value ($P_{V,Dach}$) is equal to the actual pressure ($P_{V,Act}$) if the setpoint pressure value ($P_{V,Setp}$) is above a predefined pressure threshold value ($P_2$).

6. Method according to one of Claims 2 to 5, **characterized in that** the time derivative of the predefined setpoint pressure value ($dP_{V,Setp}/dt$) is compared with a predefined threshold value ($S_1$, $S_2$) if the setpoint pressure value ($P_{V,Setp}$) is below the predefined pressure threshold value ($P_2$).

7. Method according to one of Claims 1 to 6, **characterized in that** the actual pressure value ($P_{V,Dach}$) is equal to the model pressure ($P_{V,Mod}$) if the time derivative of the predefined setpoint pressure value ($dP_{V,Setp}/dt$) is above the predefined threshold value ($S_2$) and if the setpoint pressure value ($P_{V,Setp}$) is below a predefined second pressure threshold value ($P_1$).

8. Method according to one of Claims 1 to 7, **characterized in that** the model pressure ($P_{V,Mod}$) is calculated according to a predefined characteristic curve or function ($f(X_{Akt})$) which represents the dependence, characterizing the braking system, of the actual pressure ($P_{V,Act}$) on the position ($X_{Akt}$) of the pressure supply device (50).

9. Method according to one of Claims 1 to 8, **characterized in that** the setpoint pressure value ($P_{V,Setp}$) and the actual pressure value ($P_{V,Dach}$) are fed to a pressure controller (20) with a speed controller (21) connected downstream, wherein a speed pilot controller (22a) is provided, the output variable ($\omega_{add}$) of which is determined as a function of the current position ($X_{Akt}$) of the pressure supply device (50).

10. Control device (201) which forms manipulated variables ($\omega_{Akt,Setp}$, $M_{Akt,Setp}$) for an electromechanical actuator (1) as a function of an actual pressure value ($P_{V,Dach}$) and a predefined setpoint pressure value ($P_{V,Setp}$), having a pressure controller (20) and a speed controller (21) which is connected downstream of the pressure controller, wherein the manipulated variable ($\omega_{Akt,Setp}$) which represents a setpoint actuator speed value and an actual actuator speed value ($\omega_{Akt}$) are fed as input variables to the speed controller (21), **characterized in that** means (40) are provided which determine the actual pressure value ($P_{V,Dach}$) according to one of Claims 1 to 9 and feed it to the pressure controller (20).

11. Control device (201) according to Claim 10, **characterized in that** the pressure controller (20) outputs a first setpoint actuator speed value ($\omega_{Akt,Setp,DR,Ctrl}$), a second setpoint actuator speed value ($\omega_{Akt,Setp,DR,FFW}$) is determined (22) from the setpoint pressure value ($P_{V,Setp}$), in particular the time derivative of the setpoint pressure value, a third setpoint actuator speed value ($\omega_{add}$) is determined (22a) at least from the position ($X_{Akt}$) of the pressure supply device (50), and the manipulated variable ($\omega_{Akt,Setp}$), which represents the setpoint actuator speed value, for the speed controller (21) is determined on the basis of the first, the second and the third setpoint actuator speed values ($\omega_{Akt,Setp,DR,Ctrl}$, $\omega_{Akt,Setp,DR,FFW}$, $\omega_{add}$).

12. Braking system for motor vehicles comprising at least one hydraulically actuable wheel brake (9), having an electronically controllable pressure supply device (50) for actuating the wheel brake (9), which pressure supply device (50) comprises a cylinder-piston arrangement with a hydraulic pressure chamber (4), the piston (3) of which can be displaced by an electromechanical actuator (1), having a measuring device (32) for determining an actual pressure ($P_{V,Act}$) of the pressure supply device (50), having means which directly or indirectly determine a position ($X_{Akt}$) of the pressure supply device (50), in particular of the actuator (1), and having an electronic open-loop and closed-loop control unit for controlling the electromechanical actuator (1), **characterized in that** the electronic open-loop and closed-loop control unit (33) comprises a control device (201) according to Claim 10 or 11, which forms manipulated variables ($\omega_{Akt,Setp}$, $M_{Akt,Setp}$) for the electromechanical actuator (1) as a function of an actual pressure value ($P_{V,Dach}$) and the predefined setpoint pressure value ($P_{V,Setp}$), wherein means (40) are provided which carry out a method according to one of Claims 1 to 9.

## Revendications

1. Procédé de réglage d'un système de freinage pour véhicules automobiles, comprenant un frein de roue (9) à commande hydraulique (9), qui peut être actionné au moyen d'un dispositif d'alimentation en pression (50) à commande électronique, qui comprend un agencement cylindre-piston avec un espace de pression hydraulique (4), dont le piston (3) peut être déplacé par un actionneur électromécanique (1), de telle sorte qu'une valeur de pression de consigne prédéfinie ($P_{V,Soll}$) puisse être ajustée dans l'espace de pression hydraulique (4), une position ($X_{Akt}$) du dispositif d'alimentation en pression (50) étant détectée (31), et une pression instantanée ($P_{V,Ist}$) du dispositif d'alimentation en pression (50) étant déterminée au moyen d'un dispositif de mesure (32), des grandeurs de réglage ($\omega_{Akt,Soll}$, $M_{Akt,Soll}$) pour l'actionneur électromécanique (1) étant formées à l'aide de la valeur de pression de consigne prédéfinie ($P_{V,Soll}$) et d'une valeur de pression instantanée ($P_{V,Dach}$), **caractérisé en ce que** la valeur de pression instantanée ($P_{V,Dach}$) est déterminée en fonction de la valeur de pression de consigne ($P_{V,Soll}$) par addition pondérée de la pression instantanée ($P_{V,Ist}$) et d'un modèle de pression ($P_{V,Mod}$) calculé à partir d'une position actuelle ($X_{Akt}$) du dispositif d'alimentation en pression.

2. Procédé selon la revendication 1, **caractérisé en ce que** la valeur de pression instantanée ($P_{V,Dach}$) est déterminée ou sélectionnée (40, 43) en fonction de la dérivée dans le temps de la valeur de pression de consigne prédéfinie ($dP_{V,Soll}/dt$).

3. Procédé selon la revendication 1 ou 2, **caractérisé en ce qu'**un facteur de pondération (À) pour l'addition pondérée est déterminé (42) en fonction de la valeur de pression de consigne ($P_{V,Soll}$).

4. Procédé selon la revendication 3, **caractérisé en ce que** le facteur de pondération (À) pour l'addition pondérée est déterminé (43) en fonction de la dérivée dans le temps de la valeur de pression de consigne prédéfinie ($dP_{V,Soll}/dt$).

5. Procédé selon l'une quelconque des revendications 1 à 4, **caractérisé en ce que** la valeur de pression instantanée ($P_{V,Dach}$) est identique à la pression instantanée ($P_{V,Ist}$), lorsque la valeur de pression de consigne ($P_{V,Soll}$) est située au-dessus d'une valeur de pression seuil prédéfinie ($P_2$).

6. Procédé selon l'une quelconque des revendications 2 à 5, **caractérisé en ce que** la dérivée dans le temps de la valeur de pression de consigne prédéfinie ($dP_{V,Soll}/dt$) est comparée à une valeur seuil prédéfinie ($S_1$, $S_2$) lorsque la valeur de pression de consigne ($P_{V,Soll}$) est située en-dessous de la valeur de pression seuil prédéfinie ($P_2$).

7. Procédé selon l'une quelconque des revendications 1 à 6, **caractérisé en ce que** la valeur de pression instantanée ($P_{V,Dach}$) est identique au modèle de pression ($P_{V,Mod}$) lorsque la dérivée dans le temps de la valeur de pression de consigne prédéfinie ($dP_{V,Soll}/dt$) est située au-dessus de la valeur de pression seuil prédéfinie ($S_2$) et que la valeur de pression de consigne ($P_{V,Soll}$) est située en-dessous d'une deuxième valeur de pression seuil prédéfinie ($P_1$).

8. Procédé selon l'une quelconque des revendications 1 à 7, **caractérisé en ce que** le modèle de pression ($P_{V,Mod}$) est calculé en fonction d'une caractéristique ou d'une fonction prédéfinie ($f(X_{Akt})$) qui constitue la dépendance de la pression instantanée de la position ($X_{Akt}$) du dispositif d'alimentation en pression (50) caractérisant l'installation de freinage ($P_{V,Ist}$).

9. Procédé selon l'une quelconque des revendications 1 à 8, **caractérisé en ce que** la valeur de pression de consigne ($P_{V,Soll}$) et la valeur de pression instantanée ($P_{V,Dach}$) sont envoyées à un régulateur de pression (20) avec un régulateur de vitesse aval (21), une commande de vitesse pilote (22a) étant prévue, dont la grandeur de départ ($\omega_{add}$) est déterminé en fonction de la position actuelle ($X_{Akt}$) du dispositif d'alimentation en pression (50) .

10. Dispositif de réglage (201) qui forme, en fonction d'une valeur de pression instantanée ($P_{V,Dach}$) et d'une valeur de pression de consigne prédéfinie ($P_{V,soll}$), des grandeurs de réglage ($\omega_{Akt,Soll}$, $M_{Akt,Soll}$) pour un actionneur électromécanique (1), comprenant un régulateur de pression (20) et un régulateur de vitesse (21) en aval du régulateur de pression, la grandeur de réglage ($\omega_{Akt,Soll}$) représentant une valeur de vitesse de consigne de l'actionneur et une valeur instantanée ($\omega_{Akt}$) de la vitesse de l'actionneur étant envoyées au régulateur de vitesse (21) en tant que grandeurs d'entrée, **caractérisé en ce que** des moyens (40) sont prévus pour déterminer la valeur de pression instantanée ($P_{V,Dach}$) selon l'une quelconque des revendications 1 à 9 et l'envoyer au régulateur de pression (20).

11. Dispositif de réglage (201) selon la revendication 10, **caractérisé en ce que** le régulateur de pression (20) émet une première valeur de vitesse de consigne de l'actionneur ($\omega_{Akt,Soll,Ctrl}$), une deuxième valeur de vitesse de consigne de l'actionneur ($\omega_{Akt,Soll,DR,FFW}$) est déterminée (22) à partir de la valeur de pression de consigne ($P_{V,Soll}$) en particulier de la dérivée dans le temps de la valeur de pression de consigne, une troisième valeur de vitesse de consigne de l'actionneur ($\omega_{add}$) est déterminée (22a) au moins à partir de la position ($X_{Akt}$) du dispositif d'alimentation en pression (50) et la grandeur de réglage ($\omega_{Akt,Soll}$) représentant la valeur de vitesse de consigne de l'actionneur pour le régulateur de vitesse (21) est déterminée à partir de la première, la deuxième et de la troisième valeur de vitesse de consigne de l'actionneur ($\omega_{Akt,Soll,DR,Ctrl}$, $\omega_{Akt,Soll,DR,FFW}$, $\omega_{add}$).

12. Installation de freinage pour véhicules automobiles comprenant au moins un frein de roue (9) à commande hydraulique, un dispositif d'alimentation en pression (50) à commande électronique pour l'actionnement du frein de roue (9) qui comprend un agencement cylindre-piston avec un espace de pression hydraulique (4), dont le piston (3) peut être déplacé par un actionneur électromécanique (1), un dispositif de mesure (32) pour déterminer une valeur de pression instantanée ($P_{V,Ist}$) dispositif d'alimentation en pression (50), des moyens qui déterminent, directement ou indirectement, une position ($X_{Akt}$) du dispositif d'alimentation en pression (50), en particulier de l'actionneur (1), et une unité de commande de réglage électronique pour commander l'actionneur électromécanique (1), **caractérisée en ce que** l'unité de commande de réglage électronique (33) comprend un dispositif de réglage (201) selon la revendication 10 ou 11, qui, en fonction d'une valeur de pression instantanée ($P_{V,Dach}$) et de la valeur de pression de consigne prédéfinie ($P_{V,Soll}$), forme des grandeurs de réglage ($\omega_{Akt,Soll}$, $M_{Akt,Soll}$) pour l'actionneur électromécanique (1), des moyens (40) étant prévus au moyen desquels un procédé selon l'une quelconque des revendications 1 à 9 est mis en oeuvre.

Fig. 1

Fig. 2

Fig. 3

EP 2 900 529 B1

Fig. 4

**41**

$P_{V,soll}$

41a

41b

$dP_{V,soll}/dt$

$\Rightarrow$

$P_{V,soll}$

t

# Fig. 5

$\omega_{add}$

$X_{Akt}$

$X_L$

# Fig. 6

**EP 2 900 529 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008025797 A1
- DE 102011076675 A1
- DE 102012200494 A1